# EUROPÄISCHE PATENTANMELDUNG

(11) **EP 2 339 306 A2**
(43) Veröffentlichungstag der Anmeldung: **29.06.2011**
(21) Anmeldenummer: 10010669.9
(22) Anmeldetag: 25.09.2010
(51) Int. Cl.: G01K 1/14, G01K 13/02, G01F 23/24

(54) **Verbindungseinheit mit einer Messvorrichtung**

(30) Priorität: 24.12.2009 DE 102009060363
(71) Anmelder: Volkswagen AG, 38436 Wolfsburg (DE)
(72) Erfinder: Koch, Christian, 38524 Triangel (DE); Henzel, Bernhard, 63584 Gründau (DE)

(57) **Zusammenfassung**

Die Erfindung betrifft eine Verbindungseinheit (10) zum Verbinden von Rohr- und/oder Schlauchleitungen mit einer integrierten Messvorrichtung (16) zur Bestimmung von Kenngrößen, wie beispielsweise einer Temperatur eines in der Verbindungseinheit (10) befindlichen Mediums, sowie ein Verfahren zur Erzeugung dieser Verbindungseinheit (10).

Es ist vorgesehen, dass die erfindungsgemäße Verbindungseinheit (10) ein Gehäuse (34), einen das Gehäuse (34) durchdringenden Kanal (12), einen in dem Gehäuse (34) integrierten Anschlussbereich (14) und eine in dem Gehäuse (34) integrierte und in den Kanal (12) und in den Anschlussbereich (14) ragende Messvorrichtung (16) aufweist, wobei die Messvorrichtung (16) ein Trägerelement (28), einen mit dem Trägerelement (28) an Anschlussstellen verbundenen Sensor (24), eine die Anschlussstellen umgebende Ummantelung (32) und eine den Sensor (24) überdeckende Kappe (30) umfasst.

## Beschreibung

Die Erfindung betrifft eine Verbindungseinheit zum Verbinden von Rohr- und/oder Schlauchleitungen mit einer integrierten Messvorrichtung zur Bestimmung von Kenngrößen, wie beispielsweise einer Temperatur eines in der Verbindungseinheit befindlichen Mediums, sowie ein Verfahren zur Erzeugung dieser Verbindungseinheit.

Bekannt sind verschiedene Vorrichtungen zur Messung von Temperaturen. So geht aus der DE 10 2004 062 908 A1 ein Sensor und ein Verfahren zur Herstellung eines Sensors hervor, der eine einfache Montage ermöglichen soll. Dazu wird ein Halbleiterelement und dessen Kontakte in ein aus Kunststoff hergestelltes Funktionsteil eingebettet. Der Sensor wird direkt in dem gleichen Herstellungsverfahren hergestellt, mit welchem das betreffende Funktionsteil hergestellt wird.

Die DE 196 08 675 A1 beschreibt eine medienführende Vorrichtung mit Temperaturmessurig im Medium, welche raumsparend sein und sich durch ein geringes Gewicht auszeichnen soll. Dazu wird ein wesentlicher Teil eines Sensorgehäuses mit einer medienführenden Rohrleitung in der Weise miteinander kombiniert, dass eine Steckbaueinheit mit einem Stopfen, einem Temperaturfühler und Kontaktstiften in eine T-Rohrkombination einsteckbar ist.

DE 10 2006 031 343 A1 zeigt eine Temperaturmessvorrichtung zur Erfassung der Temperatur eines in einem Leitungssystem strömenden Mediums. Dazu ist in einem zur Durchführung eines Mediums vorgesehenen Rohrstück ein Fühlkopf eingebettet, der die Temperatur des Mediums erfasst.

Die JP 200 2005 757 A offenbart eine Temperatursensoreinheit, welche Kosten senken und eine höhere Lebensdauer durch eine vereinfachte Bauweise aufweisen soll. Dazu ist ein Sensorelement aus einem wärmeempfindlichen Material in die Spitze einer inneren Ausformung eines Rohrstückes eingebettet.

Messvorrichtungen, die nicht als eine Baueinheit ausgeführt sind, bergen das Risiko von Fehlmontagen und Undichtigkeiten im Betrieb in sich. Bekannte einteilige Messvorrichtungen hingegen lassen aufgrund ihres Aufbaus keine optimale Kennwerterfassung zu oder sind aufwendig herzustellen.

Der Erfindung liegt daher die Aufgabe zugrunde, eine einfach und günstig zu erzeugende, mediendichte Baueinheit zum Verbinden von Rohr- und/oder Schlauchleitungen mit einer integrierten Messvorrichtung zur optimalen Bestimmung von Kenngrößen bereitzustellen.

Gelöst wird diese Aufgabe mit einer Verbindungseinheit mit den in Anspruch 1 genannten Merkmalen, sowie mit einem Fahrzeug nach Anspruch 5 und einem Verfahren nach Anspruch 6.

Die erfindungsgemäße Verbindungseinheit weist ein Gehäuse, einen das Gehäuse durchdringenden Kanal, einen in dem Gehäuse integrierten Anschlussbereich und eine in dem Gehäuse integrierte und in den Kanal und in den Anschlussbereich ragende Messvorrichtung auf, wobei die Messvorrichtung ein Trägerelement, einen mit dem Trägerelement an Anschlussstellen verbundenen Sensor, eine die Anschlussstellen umgebende Ummantelung und eine den Sensor überdeckende Kappe umfasst.

Hiermit ist vorteilhaft eine mediendichte Verbindungseinheit mit integrierter Messvorrichtung bereitgestellt, mit der Einbaufehler und potentielle Undichtigkeiten vermieden werden können.

In bevorzugter Ausgestaltung der Erfindung ist vorgesehen, dass die Kappe an einem Schaft von einer Fixierung umgeben ist. Hierdurch ist vorteilhaft eine besonders gute Abdichtung und eine Fixierung der Anordnung der Teile der Messvorrichtung gewährleistet. Die Messvorrichtung kann so besser als Inlay in einem Spritzguss verwendet werden.

In weiterer bevorzugter Ausgestaltung der Erfindung ist vorgesehen, dass der Sensor ein NTC-Sensor ist und die Kappe aus einem thermoleitfähigen Material ist und zwischen der Kappe und dem Sensor Wärmeleitpaste angeordnet ist. Hierdurch wird vorteilhaft erreicht, dass eine Messung der Temperatur des in dem Kanal befindlichen Mediums erfolgen kann. Die Wärmeleitpaste dient hierbei nicht nur vorteilhaft als Temperaturleiter, sondern dient auch dazu, Vibrationen zu dämpfen. Dadurch kann eine längere Betriebsdauer der Verbindungseinheit erreicht werden.

In weiterer bevorzugter Ausgestaltung der Erfindung ist vorgesehen, dass das Gehäuse aus einem Blend im Wesentlichen eines Polyamids 12 (PA12, EH, 24-010) und eines Polyamids 12 (PA12-HI, EH, 24-007) ist. Hierdurch ist das Gehäuse vorteilhaft hitzestabilisiert, schlagzähmodifiziert und kraftstoffbeständig und damit insbesondere für kraftstoffführende Leitungen geeignet.

Die erfindungsgemäße Verbindungseinheit wird vorzugsweise in allen genannten Ausgestaltungen in ein Fahrzeug implementiert.

Weiterhin wird die Aufgabe durch ein Fahrzeug mit den in Anspruch 5 genannten Merkmalen gelöst.

Das erfindungsgemäße Fahrzeug weist wenigstens eine Verbindungseinheit auf, mit einem Gehäuse, einem das Gehäuse durchdringenden Kanal, einem in dem Gehäuse integrierten Anschlussbereich und einer in dem Gehäuse integrierten und in den Kanal und in den Anschlussbereich ragenden Messvorrichtung, wobei die Messvorrichtung ein Trägerelement, einen mit dem Trägerelement an Anschlussstellen verbundenen Sensor, eine die Anschlussstellen umgebende Ummantelung und eine den Sensor überdeckende Kappe umfasst.

Hiermit ist vorteilhaft ein Fahrzeug bereitgestellt, welches eine höhere Betriebssicherheit bietet, da die wenigstens eine erfindungsgemäße Verbindungseinheit, welche das Fahrzeug aufweist, potentielle Einbaufehler und Undichtigkeiten zu vermeiden hilft.

Weiterhin wird die Aufgabe durch ein Verfahren mit den in Anspruch 6 genannten Merkmalen gelöst.

Im erfindungsgemäßen Verfahren zur Herstellung einer Verbindungseinheit wird eine Messvorrichtung durch Verbinden eines Sensors mit einem Trägerelement an Anschlussstellen, Aufbringen einer Ummantelung um die Anschlussstellen mittels Spritzgießens, Aufpressen einer Kappe über den Sensor und Aufbringen einer Fixierung erzeugt und anschließend ein Gehäuse der Verbindungseinheit mittels Spritzgießens mit der Messvorrichtung als Inlay ausgeformt.

Hiermit wird ein Verfahren bereitgestellt, welches vorteilhaft vollautomatisch realisiert werden kann. Die Kosten für die Herstellung eines erfindungsgemäßen Bauteils können so reduziert werden. Durch die Anwendung von Spritzgussverfahren wird zudem die Eigenschaft der Kunststoffe, während der Aushärtung zu schrumpfen, zum Erzeugen von mediendichten Verbindungen genutzt.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen erläutert. Es zeigen:
- Figur 1: Bauteile und eine Montagereihenfolge einer erfindungsgemäßen Verbindungseinheit;
- Figur 2: eine erfindungsgemäße Verbindungseinheit in Schnittdarstellung mit einem Haftvermittler als Fixiermittel;
- Figur 3: eine erfindungsgemäße Verbindungseinheit in Schnittdarstellung mit einem Dichtring als Fixiermittel;
- Figur 4: eine erfindungsgemäße Verbindungseinheit in Schnittdarstellung mit einem Schrumpfschlauch als Fixiermittel und
- Figur 5: eine erfindungsgemäße Verbindungseinheit mit einem gerade verlaufenden Kanal in Schnittdarstellung.

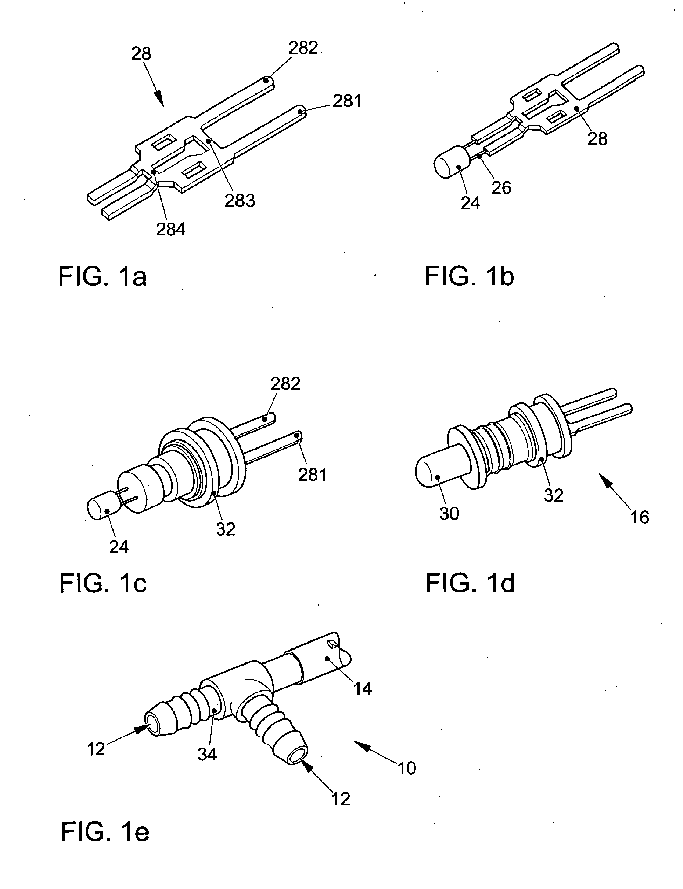

In Figur 1a) bis 1e) sind Bauteile und eine Montagereihenfolge einer erfindungsgemäßen Verbindungseinheit 10 dargestellt. Figur 1a) zeigt ein Trägerelement 28, welches ein erstes Trägerteil 281 und ein zweites Trägerteil 282 und zwei die Trägerteile 281 und 282 verbindende Querstege 283 und 284 aufweist. Das Trägerelement 28 besteht vorzugsweise aus elektrisch leitfähigem Material, oder aus einem Isolator, auf und/oder in welchem elektrisch leitende Bahnen eingebracht sind. Vorzugsweise besteht das Trägerelement 28 im Wesentlichen aus Messing. Auch ein Trägerelement 28 aus einer anderen Kupferlegierung, Aluminium beziehungsweise einer Aluminiumlegierung ist erfindungsgemäß vorgesehen.

In einem ersten Verfahrensschritt wird das Trägerelement 28 mit einem Sensor 24 verbunden - Figur 1b). Sensorkontakte 26 des Sensors 24 werden dazu jeweils mit einem Trägerteil 281 oder 282 fest und elektrisch leitend verbunden, vorzugsweise durch Widerstandsschweißen.

Der Sensor 24 ist bevorzugt einer des Typs, dessen elektrischer Widerstand bei steigender Temperatur abnimmt. Dieser Sensortyp wird auch als NTC-Sensor bezeichnet, nach der englischen Bezeichnung: negative temperature coefficient. Erfindungsgemäß sind neben Temperatursensoren auch andere Sensoren, beispielsweise Drucksensoren oder Füllstandssensoren vorgesehen.

In einem nächsten Verfahrensschritt wird um die Verbindungsstellen, an der die Sensorkontakte 26 und das Trägerelement 28 miteinander verbunden sind, eine Ummantelung 32 aufgebracht - Figur 1c). Vorzugsweise wird die Ummantelung 32 in einem Spritzgießverfahren mit dem mit dem Sensor 24 verbundenen Trägerelement 28 als Kern erzeugt. Das Material der Ummantelung 32 ist vorzugsweise Polyamid 12 mit 30% Glasfaseranteil (PA12GF30). Mit der Ummantelung 32 werden die Verbindungsstellen isoliert und die Trägerteile 281 und 282 zueinander fixiert.

Vor und/oder nach dem Aufbringen der Ummantelung 32 erfolgt in einem oder mehreren nicht dargestellten Verfahrensschritten ein Austrennen der Querstege 283 und 284 des Trägerelements 28. Das Austrennen der Querstege 283 und 284 entfällt, wenn das Trägerelement so beschaffen ist, dass das erste Trägerteil 281 und das zweite Trägerteil 282 nicht elektrisch leitend miteinander verbunden sind, also das Trägerelement 28, oder zumindest die Querstege 283 und 284 im Wesentlichen aus einem elektrisch nichtleitfähigen Material bestehen.

In einem nächsten Verfahrensschritt wird eine Kappe 30 über den Sensor 24 und über Bereiche der Ummantelung 32 gesetzt - Figur 1d). Die Kappe 30 wird vorzugsweise aufgepresst. Ist der Sensor 24 ein Temperatursensor, wird die Kappe 30 vor dem Aufpressen mit einer Wärmeleitpaste befüllt. Dadurch wird die Wärme besser an den Sensor 24 geleitet und Vibrationen werden gedämpft. Die Kappe 30 ist nach dem Aufpressen flüssigkeitsdicht mit der Ummantelung 32 verbunden.

Die Kappe 30 ist, zumindest wenn der Sensor 24 ein Temperatursensor ist, aus einem Material mit einem hohen Wärmeleitkoeffizient gefertigt, vorzugsweise aus rostfreiem Stahl. Die Kappe 30 kommt mit ihrer Außenseite bei Bestimmung einer Kenngröße des Mediums direkt in Kontakt mit dem in der Verbindungseinheit 10 befindlichen Medium.

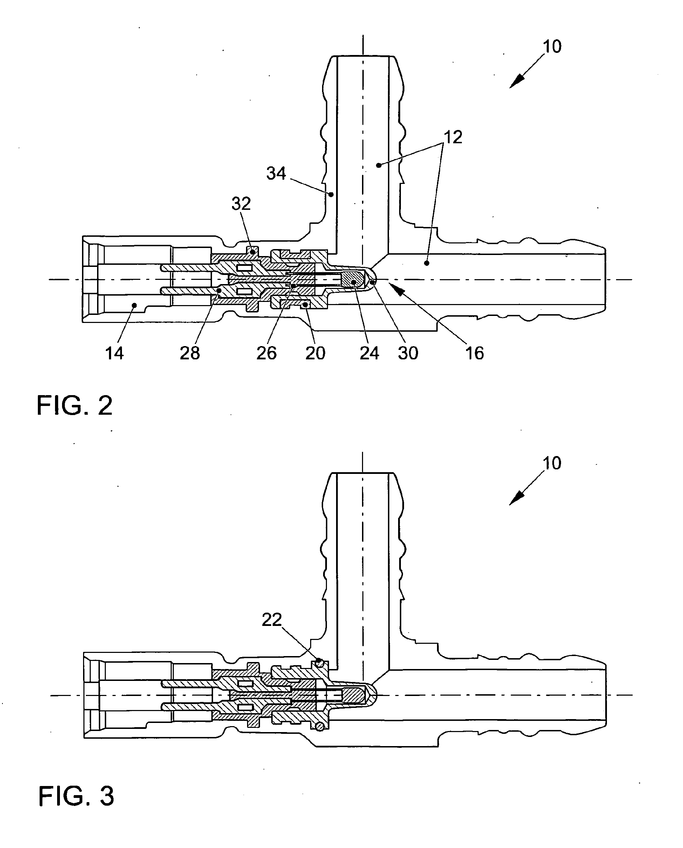

In einem nächsten nicht dargestellten Verfahrensschritt wird die Kappe 30 mit einer Fixierung versehen. Dazu wird die Kappe 30 an ihrem Schaft mit einem Schrumpfschlauch 18, einem Haftvermittler 20, einem Dichtring 22 und/oder mit einer Umspritzung 36 versehen. Die verschiedenen Varianten der Fixierung sind in den Figuren 2 bis 5 dargestellt. Vorzugsweise wird die Kappe 30 an ihrem Schaft in einem Spritzgussverfahren mit einer Umspritzung 36 umgeben. Die Spitze der Kappe 30 bleibt unumspritzt. Zusätzlich kann auch auf den Korpus der Ummantelung 32 eine Umspritzung 36 aufgetragen werden. Die Umspritzung 36 ist vorzugsweise aus einem Copolyamid (PA) zum Dichtumspritzen.

Die mittels der vorherigen Verfahrensschritte erzeugte Messvorrichtung 16 wird in einem nächsten Verfahrensschritt als Inlay in einem Spritzgussprozess verwendet, in welchem das Gehäuse 34 der Verbindungseinheit 10 angefertigt wird. Die Messvorrichtung 16 wird dabei mittels Schieber im Spritzgießwerkzeug gehalten und umspritzt. Das Gehäuse 34 ist vorzugsweise aus einem Polymer-Blend aus einem Polyamid 12 unter der Produktbezeichnung nach ISO 1874: PA12, EH, 24-010 und einem Polyamid 12 unter der Produktbezeichnung nach ISO 1874: PA12-HI, EH, 24-007 gefertigt. Die beiden Komponenten sind im Blend vorzugsweise mit einem Anteil 75 Gew.% PA12, EH, 24-010 und 25 Gew.% PA12-HI, EH, 24-007 enthalten.

Die gesamte Baueinheit wird in Figur 1e) abgebildet. Die Messvorrichtung 10 ist in der Weise umspritzt, dass die Spitze der Kappe 30 in den Kanal 12 ragt und so Kenndaten eines in dem Kanal 12 befindlichen Mediums ermitteln kann. Die restlichen Einzelteile der Messvorrichtung 16 sind vom Medium zumindest flüssigkeitsdicht abgeschottet.

Das entgegengesetzte Ende der Messvorrichtung 16, also das Trägerelement 28, ist nach dem Spritzgießen von einem Anschlussbereich 14 umgeben. Dieser ist so geformt, dass ein entsprechender Stecker einer Auswerteeinheit angefügt werden kann. Mittels des Trägerelements 28 ist dann ein elektrischer Kontakt vom Sensor 24 zur Auswerteeinheit hergestellt.

Die erfindungsgemäße Verbindungseinheit 10 wird vorzugsweise in Fahrzeugen als Kühlwassertemperatursensor und/oder Ansauglufttemperatursensor und/oder Abgasrückführungstemperatursensor und/oder Abgastemperatursensor und/oder Kraftstofftemperatursensor und/oder Öltemperatursensor und/oder Ladelufttemperatursensor und/oder Füllstandsensor und/oder Drucksensor und/oder zur Katalysatorüberwachung implementiert.

In Figur 2 ist eine erfindungsgemäße Verbindungseinheit 10 mit einem Haftvermittler.20 als Fixierung dargestellt. Die Verbindungseinheit 10 weist wie in Figur 1e) die Form eines T-Stücks auf, wobei der Kanal 12 einen rechtem Winkel beschreibt. Die Messvorrichtung 16 ist in diesem Winkel angeordnet.

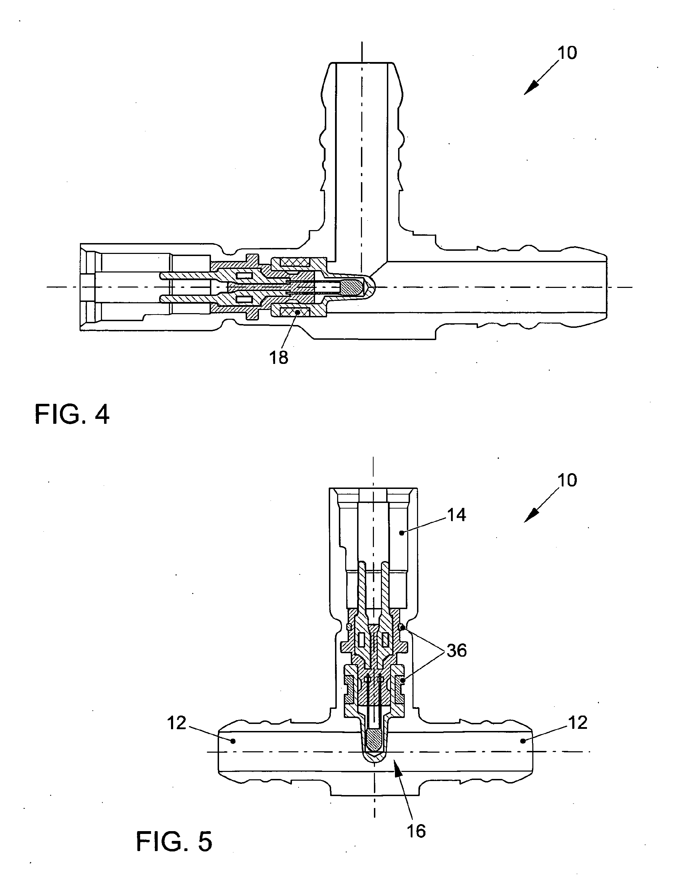

In Figur 3 ist eine erfindungsgemäße Verbindungseinheit 10 mit einem Dichtring 22 als Fixierung und in Figur 4 eine erfindungsgemäße Verbindungseinheit 10 mit einem Schrumpfschlauch 18 als Fixierung dargestellt.

Figur 5 zeigt eine erfindungsgemäße Verbindungseinheit 10 mit einem gerade verlaufenden Kanal 12. Die Messvorrichtung 16 und der Anschlussbereich 14 sind rechtswinklig zum Kanal 12 angeordnet. Die Verbindungseinheit 10 weist hier eine Umspritzung 36 als Fixierung auf.

Erfindungsgemäß kann der Kanal 12 in der Verbindungseinheit 10 einen Winkel von 0° bis 270° aufweisen, oder in einem Bogen verlaufen. Es ist auch eine Ausführung mit elastischem Gehäuse vorgesehen, bei dem der Bogen beziehungsweise der Winkel, den der Kanal 12 beschreibt, veränderbar ist. Der Winkel des Kanals 12 kann so den Bauraumverhältnissen und dem Routing der jeweiligen Leitungen angepasst werden.

### Bezugszeichenliste

- 10: Verbindungseinheit
- 12: Kanal
- 14: Anschlussbereich
- 16: Messvorrichtung
- 18: Schrumpfschlauch
- 20: Haftvermittler
- 22: Dichtring
- 24: Sensor
- 26: Sensoranschlüsse
- 28: Trägerelement
- 281: erstes Trägerteil
- 282: zweites Trägerteil
- 283: erster Quersteg
- 284: zweiter Quersteg
- 30: Kappe
- 32: Ummantelung
- 34: Gehäuse
- 36: Umspritzungen

## Patentansprüche

1. Verbindungseinheit (10) mit einem Gehäuse (34), einem das Gehäuse (34) durchdringenden Kanal (12), einem in dem Gehäuse (34) integrierten Anschlussbereich (14) und einer in dem Gehäuse (34) integrierten und in den Kanal (12) und in den Anschlussbereich (14) ragenden Messvorrichtung (16), wobei die Messvorrichtung (16) ein Trägerelement (28), einen mit dem Trägerelement (28) an Anschlussstellen (14) verbundenen Sensor (24), eine die Anschlussstellen umgebende Ummantelung (32) und eine den Sensor (24) überdeckende Kappe (30) umfasst.

2. Verbindungseinheit nach Anspruch 1, **dadurch gekennzeichnet, dass** die Kappe (30) an einem Schaft von einer Fixierung umgeben ist.

3. Verbindungseinheit nach Anspruch 1 oder 2, **dadurch gekennzeichnet, dass** der Sensor (24) ein NTC-Sensor ist und die Kappe (30) aus einem thermoleitfähigen Material ist und zwischen der Kappe (30) und dem Sensor (24) Wärmeleitpaste angeordnet ist.

4. Verbindungseinheit nach einem der Ansprüche 1 bis 3, **dadurch gekennzeichnet, dass** das Gehäuse (34) aus einem Blend im Wesentlichen eines Polyamids 12 (PA12, EH, 24-010) und eines Polyamids 12 (PA12-HI, EH, 24-007) ist.

5. Fahrzeug mit wenigstens einer Verbindungseinheit (10) mit einem Gehäuse (34), einem das Gehäuse (34) durchdringenden Kanal (12), einem in dem Gehäuse (34) integrierten Anschlussbereich (14) und einer in dem Gehäuse (34) integrierten und in den Kanal (12) und in den Anschlussbereich (14) ragenden Messvorrichtung (16), wobei die Messvorrichtung (16) ein Trägerelement (28), einen mit dem Trägerelement (28) an Anschlussstellen verbundenen Sensor (24), eine die Anschlussstellen umgebende Ummantelung (32) und eine den Sensor (24) überdeckende Kappe (30) umfasst.

6. Verfahren zur Herstellung einer Verbindungseinheit, wobei eine Messvorrichtung (16) durch Verbinden eines Sensors (24) mit einem Trägerelement (28) an Anschlussstellen, Aufbringen einer Ummantelung (32) um die Anschlussstellen mittels Spritzgießens, Aufpressen einer Kappe (30) über den Sensor (24) und Aufbringen einer Fixierung erzeugt und anschließend ein Gehäuse der Verbindungseinheit (10) mittels Spritzgießens mit der Messvorrichtung (16) als Inlay ausgeformt wird.
